# EUROPÄISCHE PATENTANMELDUNG

(11) **EP 2 628 767 A1**
(43) Veröffentlichungstag der Anmeldung: **21.08.2013**
(21) Anmeldenummer: 12156223.5
(22) Anmeldetag: 20.02.2012
(51) Int. Cl.: C08L 9/00, C08L 9/06, C08J 5/12

(54) **Schwefelvernetzbare Gummierungsmischung**

(71) Anmelder: Continental Reifen Deutschland GmbH, 30165 Hannover (DE)
(72) Erfinder: Kramer, Thomas, 32049 Herford (DE); Recker, Carla, 30167 Hannover (DE); De Risi, Francesca, 30161 Hannover (DE); Plevak, Zdeno, 01707 Povazska Bystrica (SK)
(74) Vertreter: Fornefett, Iris

(57) **Zusammenfassung**

Die Erfindung betrifft eine schwefelvernetzbare Gummierungsmischung für textile Festigkeitsträger in Fahrzeugluftreifen. Ferner betrifft die Erfindung einen Fahrzeugluftreifen, der zumindest eine solche vulkanisierte Gummierungsmischung aufweist.

Für die Bereitstellung einer Gummierungsmischung, die bei guter Haftung zu textilen Festigkeitsträgern zu weniger Verunreinigungen bei der Mischungsherstellung führt und kostengünstiger ist, ist die Gummierungsmischung im Wesentlichen frei von einem Methylenakzeptor-Methylendonor-Paar.

## Beschreibung

Die Erfindung betrifft eine schwefelvernetzbare Gummierungsmischung für textile Festigkeitsträger in Fahrzeugluftreifen. Ferner betrifft die Erfindung einen Fahrzeugluftreifen, der zumindest eine solche vulkanisierte Gummierungsmischung aufweist.

In schwefelvernetzbaren Gummierungsmischungen für textile Festigkeitsträger wie Rayon, Polyamid und Polyester werden üblicherweise so genannte Methylenakzeptor-Methylendonor-Paare eingesetzt, um zusätzlich zur Anbindung über das Schwefelnetzwerk eine Verbindung zur Haftimprägnierung des textilen Festigkeitsträgers, in der Regel ein RFL-Dip, zu erzielen. Der RFL-Dip beinhaltet Resorcin und Formaldehyd oder deren Vorkondensate.

Als Methylendonor/Formaldehydspender werden z. B. Hexamethoxymethylmelamin (HMMM) und/oder Hexamethylentetramin (HMT) eingesetzt. Ihr Einsatz ist in der Reifenindustrie weit verbreitet. Als Methylenakzeptorreaktanten kommen Resorcin und Resorcinäquivalente oder deren Vorkondensate zum Einsatz. Während des Vulkanisationsprozesses wird aus dem Methylendonor und dem Methylenakzeptor ein Harz gebildet. Es bildet sich neben dem Schwefelnetzwerk ein zweites Netzwerk basierend auf Methylendonor und Methylenakzeptor aus, welches mit dem RFL-Dip in haftende Wechselwirkung tritt.

Mischungen, die auf Methylenakzeptorreaktanten verzichten, sind z. B. aus der EP 0 830 423 B1 und der EP 2 065 219 A1 bekannt. In diesen Schriften werden aber so genannte selbstkondensierende alkylierte Triazinharze mit hoher Imino- und/oder Methylolfunktionalität eingesetzt, wobei angenommen wird, dass die hohe Imino- und/oder Methylolfunktionalität es diesen Harzen erlaubt, selbst zu kondensieren und dabei ein für die Haftung nötiges Netzwerk zu bilden, ohne dass es eines Methylenakzeptorreaktanten bedarf. Der Verzicht auf ein Methylenakzeptor-Methylendonor-Paar wird in diesen Schriften nicht erwähnt.

Resorcin hat einen relativ hohen Dampfdruck bei den Verarbeitungstemperaturen einer Gummierungsmischung, so dass es z. T. bei der Verarbeitung verdampft und sich an kühleren Bauteilen niederschlägt. Dies führt zu großen Verunreinigungen und somit hohem Reinigungsaufwand. Ferner ist Resorcin als gesundheitsschädlich und umweltgefährlich eingestuft. Durch den Einsatz vorkondensierter Resorcinprodukte lassen sich die Verunreinigungen reduzieren, allerdings sind diese deutlich teurer.

Der Erfindung liegt daher die Aufgabe zu Grunde, eine Gummierungsmischung bereitzustellen, die bei guter Haftung zu textilen Festigkeitsträgern zu weniger Verunreinigungen bei der Mischungsherstellung führt und kostengünstiger ist.

Gelöst wird die Aufgabe erfindungsgemäß dadurch, dass die Gummierungsmischung im Wesentlichen frei von einem Methylenakzeptor-Methylendonor-Paar ist.

Es wurde überraschenderweise festgestellt, dass bei auch bei Verzicht auf ein Methylenakzeptor-Methylendonor-Paar eine Haftung zu textilen Festigkeitsträgern erzielt werden kann, die auf dem Niveau mit Methylenakzeptor-Methylendonor-Paar liegt. Die Haftung bleibt auch nach Alterung bestehen. Die Mischungen sind durch den Verzicht auf das Methylenakzeptor-Methylendonor-Paar deutlich günstiger. Verunreinigungen an Maschinenbauteilen auf Grund von Methylenakzeptor und/oder Methylendonor treten nicht mehr auf.

Zusätzlich bieten die erfindungsgemäßen Mischungen den Vorteil, dass sie insbesondere während der Verarbeitung weniger gesundheitsschädlich und umweltgefährdend sind als die üblichen Gummierungsmischungen mit Resorcin.

Im Rahmen dieser Erfindung ist unter dem Ausdruck "im Wesentlichen frei von einem Methylenakzeptor-Methylendonor-Paar" zu verstehen, dass solche Substanzen nur in geringen Mengen, z. B. als Verunreinigungen in anderen Bestandteilen der Zuschlagstoffe der Gummierungsmischung, vorhanden sind.

Die schwefelvernetzbare Gummierungsmischung enthält weitere in der Kautschukindustrie übliche Bestandteile, insbesondere zumindest einen Kautschuk. Als Kautschuke können Dienkautschuke eingesetzt werden. Zu den Dienkautschuken zählen alle Kautschuke mit einer ungesättigten Kohlenstoffkette, die sich zumindest teilweise von konjugierten Dienen ableiten.

Die Gummierungsmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.

Enthält die Kautschukmischung als Dienkautschuk Polybutadien (BR), kann es sich dabei sowohl um cis-1,4- als auch um Vinyl-Polybutadien (ca 10-90 Gew.-% Vinyl-Anteil) handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Als weitere Dienkautschuke sind Styrol-Butadien-Copolymere einsetzbar. Bei den Styrol-Butadien-Copolymeren kann es sich um lösungspolymerisierte Styrol-Butadien-Copolymere (S-SBR) mit einem Styrolgehalt, bezogen auf das Polymer, von ca. 10 bis 45 Gew.-% und einem Vinylgehalt (Gehalt an 1,2-gebundenem Butadien, bezogen auf das gesamte Polymer) von 10 bis 70 Gew.-% handeln, welches zum Beispiel unter Verwendung von Lithiumalkylen in organischem Lösungsmittel hergestellt werden können. Die S-SBR können auch gekoppelt und endgruppenmodifiziert sein. Es können aber auch emulsionspolymerisierte Styrol-Butadien-Copolymere (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Die in der Mischung eingesetzten Dienkautschuke, insbesondere die Styrol-Butadien-Copolymere, können auch in teilweiser oder vollständig funktionalisierter Form eingesetzt werden. Die Funktionalisierung kann dabei mit Gruppen erfolgen, die mit den verwendeten Füllstoffen, insbesondere mit OH-Gruppen tragenden Füllstoffen, wechselwirken können. Es kann sich dabei z. B. um Funktionalisierungen mit Hydroxylgruppen und/oder Epoxygruppen und/oder Siloxangruppen und/oder Aminogruppen und/oder Phthalocyaningruppen und/oder Carboxygruppen handeln.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk oder Ethylen-Propylen-Dien-Kautschuk (EPDM), enthalten.

Gemäß einer bevorzugten Weiterbildung der Erfindung enthält die Gummierungsmischung
- 20 bis 100 phr Polyisopren,
- 0 bis 50 phr Polybutadien und
- 0 bis 80 phr eines emulsionspolymerisierten Styrolbutadiencopolymers.

Die in dieser Schrift verwendete Angabe phr (parts per hundred parts of rubber by weight) ist dabei die in der Kautschukindustrie übliche Mengenangabe für

Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. Die Masse aller in der Mischung vorhandenen Kautschuke addiert sich zu 100.

Durch diese Gummierungsmischung erzielt man eine gute Verarbeitbarkeit beim Kalandrieren und die Mischung ist kostengünstig.

Die Kalandrierbarkeit lässt sich weiter verbessern, wenn die Gummierungsmischung
- 30 bis 70 phr Polyisopren,
- 10 bis 50 phr Polybutadien und
- 10 bis 50 phr eines emulsionspolymerisierten Styrolbutadiencopolymers enthält.

Die Gummierungsmischung kann unterschiedliche Füllstoffe, wie Ruße, Kieselsäuren, Alumosilicate, Kreide, Stärke, Magnesiumoxid, Titandioxid oder Kautschukgele in üblichen Mengen enthalten, wobei die Füllstoffe in Kombination eingesetzt werden können.

Wird Ruß in der Gummierungsmischung eingesetzt, handelt es sich bevorzugt um solche Typen, die eine CTAB-Oberfläche (gemäß ASTM D 3765) von mehr als 30 m²/g aufweisen. Diese lassen sich einfach einmischen und gewährleisten einen geringen Wärmeaufbau.

Sind Kieselsäuren in der Mischung enthalten, kann es sich um die für Reifenkautschukmischungen üblichen Kieselsäuren handeln. Besonders bevorzugt ist es, wenn eine fein verteilte, gefällte Kieselsäure verwendet wird, die eine CTAB-Oberfläche (gemäß ASTM D 3765) von 30 bis 350 m²/g, vorzugsweise von 120 bis 250 m²/g, aufweist. Als Kieselsäuren können sowohl konventionelle Kieselsäure wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen. Kieselsäuren werden bevorzugt in Mengen von weniger als 15 phr eingesetzt.

Enthält die Gummierungsmischung Kieselsäure oder andere polare Füllstoffe, können der Mischung zur Verbesserung der Verarbeitbarkeit und zur Anbindung des polaren Füllstoffes an den Kautschuk Silan-Kupplungsagenzien zugesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH2 oder -Sx- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. Die Silan-Kupplungsagenzien können dabei auch als Gemisch mit Industrieruß zugesetzt werden, wie z. B. TESPT auf Ruß (Handelsname X50S der Firma Evonik). Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363 von der Firma Evonik Industries vertrieben werden.

Des Weiteren kann die erfindungsgemäße Gummierungsmischung übliche Zusatzstoffe in üblichen Gewichtsteilen enthalten. Zu diesen Zusatzstoffen zählen Weichmacher, wie z. B. Glyceride, Faktisse, aromatische, naphthenische oder paraffinische Mineralölweichmacher (z. B. MES (mild extraction solvate) oder TDAE (treated distillate aromatic extract)), Öle auf Basis nachwachsender Rohstoffe (wie z. B. Rapsöl, Terpenöle (z. B. Orangenöle) oder Faktisse), so genannte BTL-Öle (wie sie in der DE 10 2008 037714 A1 offenbart sind) oder flüssige Polymere (wie z. B. flüssiges Polybutadien)); Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Zinkoxid und Fettsäuren (z. B. Stearinsäure), Wachse, Klebharze und Mastikationshilfsmittel, wie z. B. 2,2'-Dibenzamidodiphenyldisulfid (DBD).

Die Vulkanisation wird in Anwesenheit von Schwefel und/oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 8 phr, Schwefel bevorzugt in Mengen von 0,4 bis 4 phr) der Gummierungsmischung zugesetzt. Die Vulkanisation kann auch in Anwesenheit von sehr geringen Schwefelmengen in Kombination mit schwefelspendenden Substanzen erfolgen.

Des Weiteren kann die Gummierungsmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide, Thiophosphate. Die Beschleuniger können auch in Kombination miteinander eingesetzt werden, wobei sich synergistische Effekte ergeben können.

Die Herstellung der erfindungsgemäßen Gummierungsmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet.

Die Gummierungsmischung kann für die Gummierung unterschiedlicher Festigkeitsträger im Reifen eingesetzt werden. Sie kann z. B. als Gummierung für die Karkasse oder als Gummierung für die Bandage eingesetzt werden.

Die Herstellung der erfindungsgemäßen Fahrzeugluftreifen erfolgt nach dem Fachmann bekannten Verfahren.

Die Erfindung soll nun anhand der nachstehenden Tabellen näher erläutert werden.

In den Tabelle 1 sind eine Vergleichsmischung mit Resorcin (Methylenakzeptor) und HMMM (Methylendonor) und eine erfindungsgemäße Gummierungsmischung ohne derartige Substanzen angegeben. Es handelt sich um eine Textilcordgummierung für Fahrzeugluftreifen.

Die Mischungsherstellung erfolgte unter üblichen Bedingungen unter Herstellung einer Grundmischung und anschließend der Fertigmischung in einem Labortangentialmischer. Aus sämtlichen Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
- Shore-A-Härte bei Raumtemperatur und 70 °C gemäß DIN 53 505
- Rückprallelastizität bei Raumtemperatur und 70 °C gemäß DIN 53 512
- Zugfestigkeit bei Raumtemperatur gemäß DIN 53 504
- Reißdehnung bei Raumtemperatur gemäß DIN 53 504
- Spannungswerte (Modul) bei 100 bzw. 300 % Dehnung bei Raumtemperatur gemäß DIN 53 504

Ferner wurden mit den Mischungen Haftversuche, so genannte Peel-Tests, gemäß ISO 36:2011 (E) mit Auswertung gemäß DIN ISO 6133 an verschiedenen textilen Festigkeitsträgern mit und ohne Alterung vorgenommen. Dazu wurden Festigkeitsträgercorde aus PA 6.6, Rayon und PET mit den unvulkanisierten Gummierungsmischung kalandriert und anschließend vulkanisiert. Anschließend wurde die Kraft zum Abschälen der Mischung von den Corden vor und nach Alterung über 14 Tage bei 70 °C in Luft und über 4 Tage bei 70 °C in Sauerstoff ermittelt und die Bedeckung der Corde mit Mischung nach dem Abziehen optisch ermittelt. 5 bedeutet vollständige Bedeckung, 0 bedeutet, dass keine Gummireste mehr auf dem Cord verblieben sind. Die Ergebnisse der Haftversuche sind in Tabelle 2 dargestellt.

**Tabelle 1**

| **Bestandteile** | **Einheit** | **1(V)** | **2(E)** |
|---|---|---|---|
| Polyisopren | phr | 50 | 50 |
| Polybutadien | phr | 20 | 20 |
| ESBR^{a)} | phr | 41,25 | 41,25 |
| Ruß N660 | phr | 65 | 65 |
| Weichmacheröl/Klebharz | phr | 20,5 | 20,5 |
| Alterungsschutzmittel | phr | 2 | 2 |
| Resorcin | phr | 1,63 | - |
| Hexamethoxymethylmelamin^{b)} | phr | 2 | - |
| Stearinssäure | phr | 1 | 1 |
| Zinkoxid | phr | 3 | 3 |
| Beschleuniger | phr | 1 | 1 |
| Schwefel | phr | 3,8 | 3,8 |

| **Eigenschaften** | | | |
|---|---|---|---|
| Härte bei RT | ShoreA | 52 | 51 |
| Härte bei 70 °C | ShoreA | 50 | 48 |
| Rückprallelast. bei RT | % | 48 | 50 |
| Rückprallelast. bei 70 °C | % | 59 | 62 |
| Zugfestigkeit bei RT | MPa | 14,3 | 14,8 |
| Reißdehnung bei RT | % | 594 | 619 |
| Modul 100 % | MPa | 1,4 | 1,4 |
| Modul 300 % | MPa | 6,6 | 6,3 |

| | | | |
|---|---|---|---|
| ^{a)} ölverstreckt mit 27,3 % aromatenfreiem Öl ^{b)} 65 %ig auf anorganischem Träger | | | |

Bei den Textilcordgummierungsmischungen der Tabelle 3 wirkt sich das Weglassen von Resorcin ebenfalls positiv auf die Rückprallelastizität bei 70 °C aus, wobei gleichzeitig der Spannungswert bei 300 % Dehnung auf hohem Niveau liegt.

**Tabelle 2**

| **Eigenschaft** | **Einheit** | **1(V)** | **2(E)** |
|---|---|---|---|
| Haftung zu PA 6.6 | N/25mm | 249 | 200 |
| Bedeckung von PA 6.6 | - | 4,7 | 4,8 |
| Haftung zu PA 6.6 nach Alterung in Luft | N/25mm | 168 | 174 |
| Bedeckung von PA 6.6 nach Alterung in Luft | - | 5 | 4,8 |
| Haftung zu PA 6.6 nach Alterung in O₂ | N/25mm | 125 | 135 |
| Bedeckung von PA 6.6 nach Alterung in O₂ | - | 5 | 4,7 |
| Haftung zu Rayon | N/25mm | 234 | 197 |
| Bedeckung von Rayon | - | 3,5 | 2,8 |
| Haftung zu Rayon nach Alterung in Luft | N/25mm | 160 | 177 |
| Bedeckung von Rayon nach Alterung in Luft | - | 4 | 3,7 |
| Haftung zu Rayon nach Alterung in O₂ | N/25mm | 131 | 145 |
| Bedeckung von Rayon nach Alterung in O₂ | - | 4,2 | 3,8 |
| Haftung zu PET | N/25mm | 228 | 190 |
| Bedeckung von PET | - | 4 | 4 |
| Haftung zu PET nach Alterung in Luft | N/25mm | 160 | 137 |
| Bedeckung von PET nach Alterung in Luft | - | 4,2 | 3,5 |
| Haftung zu PET nach Alterung in O₂ | N/25mm | 131 | 135 |
| Bedeckung von PET nach Alterung in O₂ | - | 5 | 4,8 |

Bei den in den Tabellen dargestellten Textilcordgummierungsmischungen wirkt sich das Weglassen von Resorcin und HMMM nicht negativ aus. Die Haftungswerte liegen zumindest auf gleichem Niveau. Nach Alterung erzielt man sogar oftmals höhere Haftungswerte mit dem Mischungen ohne Methylenakzeptor-Methylendonor-Paar. Auch die Bedeckungsgrade sind ähnlich.

Durch das Fehlen des Harznetzwerkes aus Resorcin und HMMM kommt es bei der erfindungsgemäßen Mischung zu einer leichten Erniedrigung in der Härte und den Spannungswerten, diesem Effekt kann aber durch Maßnahmen im Vulkanisationssystem entgegengewirkt werden.

Positiv wirkt sich das Weglassen von Resorcin und HMMM auf die Rückprallelastizität bei 70 °C aus, was bei Fahrzeugluftreifen zu einer vorteilhaften Erniedrigung des Rollwiderstandes führt.

## Patentansprüche

1. Schwefelvernetzbare Gummierungsmischung für textile Festigkeitsträger in Fahrzeugluftreifen,
**dadurch gekennzeichnet,**
**dass** sie im Wesentlichen frei von einem Methylenakzeptor-Methylendonor-Paar ist.

2. Schwefelvernetzbare Gummierungsmischung nach Anspruch 1, **dadurch gekennzeichnet, dass** sie
- 20 bis 100 phr Polyisopren,
- 0 bis 50 phr Polybutadien und
- 0 bis 80 phr eines emulsionspolymerisierten Styrolbutadiencopolymers enthält.

3. Schwefelvernetzbare Gummierungsmischung nach Anspruch 2, **dadurch gekennzeichnet, dass** sie
- 30 bis 70 phr Polyisopren,
- 10 bis 50 phr Polybutadien und
- 10 bis 50 phr eines emulsionspolymerisierten Styrolbutadiencopolymers enthält.

4. Fahrzeugluftreifen, der zumindest eine vulkanisierte Gummierungsmischung nach einem der vorhergehenden Ansprüche aufweist.

5. Fahrzeugluftreifen nach Anspruch 4, **dadurch gekennzeichnet, dass** die Gummierungsmischung als Karkassgummierung aufweist.

6. Fahrzeugluftreifen nach Anspruch 4, **dadurch gekennzeichnet, dass** die Gummierungsmischung als Bandagengummierung aufweist.
